Europäisches Patentamt

European Patent Office

Office européen des brevets

(11) Publication number: **0 501 300 A1**

## EUROPEAN PATENT APPLICATION

(21) Application number: **92102797.5**

(22) Date of filing: **20.02.92**

(51) Int. Cl.⁵: **C08F 14/06**, C08L 27/06

(30) Priority: **01.03.91 US 663986**

(43) Date of publication of application:
**02.09.92 Bulletin 92/36**

(84) Designated Contracting States:
**AT BE CH DE DK ES FR GB GR IT LI LU NL PT SE**

(71) Applicant: **The B.F. Goodrich Company**
**3925 Embassy Parkway**
**Akron Ohio 44313(US)**

(72) Inventor: **Cozens, Ross James**
**15261 High Point Avenue**
**Strongsville, Ohio 44136(US)**

(74) Representative: **von Kreisler, Alek,**
**Dipl.-Chem. et al**
**Patentanwälte Von Kreisler-Selting-Werner,**
**Deichmannhaus am Hauptbahnhof**
**W-5000 Köln 1(DE)**

(54) **High melt flow crosslinked PVC resin, compound and articles derived therefrom.**

(57) Low complex viscosity crosslinked polyvinyl halide resins and post-chlorinated versions are disclosed. Said crosslinked resins, including post-chlorinated crosslinked polyvinyl chloride are produced by suspension, mass, emulsion, micro suspension and preferably a skinless process. Said resins are polymerized in the presence of a complex viscosity suppressant which is at least partially miscible in vinyl halide monomer and substantially removable from said resin by conventional means. The preferred said suppressant is selected from the group consisting of substituted or unsubstituted lower aromatics, lower ethers, esters, lower ketones, lower aldehydes, halogenated hydrocarbons and derivatives. Lower ethers are preferred and most preferred are unsubstituted cyclic ethers. The invention includes blend compositions comprising said modified crosslinked polyvinyl halide resin including post-chlorinated versions in combination with uncrosslinked polyvinyl halide resin or post-chlorinated version, said resins and blends are useful for flexible and rigid articles, in particular, large and/or intricate molded articles requiring enhanced melt flow.

EP 0 501 300 A1

Field of the Invention

This invention pertains to polyvinyl halide, in particular polyvinyl chloride and post-chlorinated versions thereof, thermoplastic compounds and articles derived therefrom.

Background of the Invention

Crosslinked PVC resins prepared either by bulk, suspension or emulsion processes generally encompass the incorporation of crosslinking monomers, many of which are commercially available and contain a plurality of ethylenic unsaturated groups. Post-polymerization crosslinking methods are also known. The physical properties of PVC resin are notably changed on crosslinking of chain segments. Crosslinking for example generally reduces the melt flow of any polymer at a given molecular weight. Crosslinking also extends the temperature range over which rubbery properties are exhibited. In blends with uncrosslinked PVC stress relaxation of microdomains of crosslinked PVC on melt cooling is also changed. This difference in particular, is exploited in producing a dull matte finish on the surface of molded articles by blending crosslinked and uncrosslinked resins.

The changes in physical properties on crosslinking can be monitored by measuring viscoelastic behavior under cyclical small deformations such as is measured with the use of a mechanical spectrometer. The method used for determining viscoelastic properties of the subject resins involves subjecting a disk-shaped sample to very small deformation (less than 1% strain) in a cyclic fashion using a Rheometrics Mechanical Spectrometer equipped with oscillating parallel plates. During deformation of the sample, a certain amount of energy is lost due to molecular segmental motions. The remaining energy is stored by elastic mechanism. The two types of behavior are simultaneously measured during testing and are reflected in the magnitudes of the loss modulus (G'') and storage or elastic modulus (G'). A relative indication of the extent of crosslinking present in any polymer species under study therefore is the ratio of G'' to G' that is, the Tan delta (tan $\delta$). The tan $\delta$ can be expressed by the formula: Tan $\delta$ = G''/ G'. A PVC homopolymer with no crosslinking would have a tan $\delta$ of about 1.0. As the extent of crosslinking increases, the tan $\delta$ gets smaller. The tan $\delta$ of the resins relative to this invention are therefore less than 1.0 and preferably within a desired rage specified herein below.

Just as with crosslinking, higher molecular weight resins exhibit comparatively lower melt flow rates. Higher molecular weight polyvinyl halide is characterized by longer distances between chain branches. Generally, molecular weight reduction can be achieved by polymerization at higher temperature or by the use of chain transfer agents or a combination of these methods. As molecular weight is reduced, melt flow rates are increased.

Inherent viscosity (IV) (ASTM D-1243) is the method of expressing as a dilute solution viscosity, the molecular weight of a vinyl resin which is not crosslinked and therefore soluble in the solvent used for viscosity determination. However, with crosslinked vinyl resins, the resin is not completely soluble, thus IV is not meaningful. The molecular weight of crosslinked PVC resins can be expressed as complex viscosity, with the units being pascal-seconds (poise).

The melt behavior equivalency of IV to complex viscosity is made by direct melt flow comparison. In terms of observed melt behavior in practice, a crosslinked resin having a complex viscosity of $0.9 \times 10^5$ poise exhibits similar melt flow rates compared to an uncrosslinked resin having an IV of about 0.8 and a resin having a complex viscosity of $60.0 \times 10^5$ poise exhibits melt flow rates approximating the flow rate of an uncrosslinked PVC having an IV of about 1.5. In practice, one readily becomes familiar with the approximate melt flow equivalency between an uncrosslinked resin and a crosslinked resin.

There are limitations in the moldability of a PVC or chlorinated PVC (CPVC) resin having a relatively higher IV or higher complex viscosity. In applications of rigid PVC, including CPVC, employing a minor amount of a crosslinked PVC, low melt flow rate presents a serious limitation for injection molding in general and in particular for relatively large articles, or those with intricate shapes. Therefore, where a crosslinked PVC resin is blended with a uncrosslinked resin, the combination used for example for matte finish articles or other intended uses, a higher melt flow blend is desired. Utilization of lower I.V. uncrosslinked PVC or CPVC to improve the melt flow of the blend is not a desired approach in that the predominant physical properties derived from said low I.V. polymer are inferior to those polymers having a higher I.V.. The blended crosslinked PVC therefore places a limit on the choice of I.V. of the predominant uncrosslinked resin used or at least induces the need for elaborate modifying means for achieving desired melt flow.

Attempts to reduce the molecular weight of a crosslinked resin by way of the use of conventional chain transfer agents failed. An attempt was made to produce a chain transfer modified crosslinked polyvinyl chloride polymer in a batch process at 53°C using 0.32 weight parts of 2-mercapto ethanol and 0.32 weight parts of di-allyl phthalate. There was no conversion of vinyl chloride monomer. The conventional chain transfer agent was interfered with due to the apparent interaction of the chain transfer agent with the crosslinking agent and initiator present. In alternative attempts at high polymerization temperature to obtain a reduced molecular weight crosslinked polymer of vinyl chloride and di-allyl phthalate without the use of a mercaptan chain transfer agent, a sufficiently crosslinked resin was obtained but the complex viscosity was not reduced to a desired extent. At high polymerization temperatures, the molecular weight of PVC resin was not reduced appreciably below those levels disclosed in U.S. Pat. No. 4,742,085, pertaining to crosslinked skinless suspension PVC. The complex viscosities disclosed in '085 raged from about $0.9 \times 10^5$ to about $53 \times 10^5$ poise. There are other practical limitations in employing high temperatures of polymerization as well as the use of chain transfer agents at high polymerization temperatures.

In view of the aforementioned limitations, an effective method for molecular weight reduction of crosslinked polyvinyl halide polymers has heretofore not been disclosed but is desired in view of the limitations presented. Such a method is needed in view of the undesirable features of low temperature polymerization requiring longer polymerization time and yielding relatively higher molecular weight as well as the undesirable use of relatively high polymerization temperatures which present problems in heat transfer, polymerization rate control, safety and uniformity of crosslink morphology.

It would therefore be desirable to provide a practical method for achieving lower complex viscosity crosslinked PVC. Achieving this end within a moderate polymerization temperature range is particularly desirable. It would also be advantageous to achieve a reduction in complex viscosity while retaining crosslinking without the use of chain transfer agents which interfere with conventional crosslinking monomers.

Summary of the Invention

It is an aspect of the present invention to provide a crosslinked PVC resin or post-chlorinated version, preferably a skinless resin, and having a complex viscosity reduced below that level heretofore achieved, namely a complex viscosity less than about $8 \times 10^4$, preferably between about $4 \times 10^2$ poise and $8 \times 10^4$ poise, said resin also exhibiting a degree of crosslinking as measured by a tan delta of less than about 1.0, and preferably between about 0.3 and 0.8.

In another aspect, this invention pertains to a reduced complex viscosity crosslinked polyvinyl halide resin or post-chlorinated version wherein said resin is prepared by polymerizing vinyl halide monomer with a polymerization initiator and a crosslinking agent for the vinyl halide monomer in a polymerization medium which contains an effective amount of a complex viscosity suppressant which does not interfere with the crosslinking agent. Said suppressant reducing the complex viscosity of the resulting polymer, is at least partially miscible in vinyl halide monomer. The preferred suppressant is selected from the group consisting of lower aromatics and derivatives , lower ethers and derivatives, esters and derivatives, ketones and derivatives, aldehydes, and halogenated alkylenes.

In yet another aspect, this invention pertains to blends and articles derived therefrom comprising a reduced complex viscosity crosslinked PVC resin or post-chlorinated version in combination with a uncrosslinked PVC or CPVC, the blends having improved melt processing properties for forming said articles.

The crosslinked, reduced complex viscosity resins of this invention are employed in a variety of fabricating means namely, extrusion, injection and blow molding particularly of large or intricate articles compared to conventional crosslinked PVC resins, i.e., with crosslinked resins having complex viscosities at 210°C of greater than about $0.9 \times 10^5$.

DETAILED DESCRIPTION OF THE INVENTION

The modified crosslinked polyvinyl halide resins and post-chlorinated polyvinyl halide resins referred to in this specification mean any halogenated vinyl polymer including polymers substantially comprising polymerized vinyl fluoride, vinyl chloride, vinyl bromide, vinylidene halides such as vinylidene fluoride and vinylidene bromide, copolymers and mixtures of these halogenated monomers. Said modified crosslinked resins can be prepared by any chosen polymerization method. The processes including mass or bulk, suspension, dispersion, emulsion and micro suspension are all pertinent to the preparation of the modified resins herein disclosed.

A mass process is described in U.S. Patent No. 3,522,227, incorporated herein by reference. An emulsion process is disclosed in U.S. Patent No. 4,458,057, incorporated herein by reference. A phase inversion process may also be used. Such a phase inversion process is disclosed in U.S. Patent No. 3,706,722, incorporated herein by reference. In the phase inversion process, the monomer is the continuous phase during the early part of the polymerization and after about 10% monomer conversion additional water is added whereby a phase inversion takes place. Beyond this point, water is the continuous phase and monomer becomes the dispersed phase. Preferably, said modified resins employed in the practice of the invention are skinless and prepared either by a mass or bulk process or most preferably prepared by the skinless suspension process disclosed in U.S. Patent No. 4,742,085 incorporated herein by reference.

For the sake of brevity, a detailed description for illustration of example crosslinked polyvinyl halide polymers or post-chlorinated crosslinked versions will pertain to the preparation of polyvinyl chloride (PVC) resins by the aqueous suspension polymerization method. It is understood that this description is not a limitation as to the polymer compositions nor the particular polymerizing technique which can be pursued in the practice of this invention.

Crosslinked polyvinyl chloride resin, an exemplary subject resin, means crosslinked polyvinyl chloride homopolymers as well as vinyl chloride polymerized with a crosslinking agent and optionally up to 50%, preferably not more than about 20%, by weight of one or more other ethylenic unsaturated comonomers having at least one terminal $CH_2 = C<$ grouping. Suitable comonomers that may be polymerized with vinyl chloride are the $\alpha,-\beta$-olefinically unsaturated carboxylic acids, such as acrylic acid, methacrylic acid, ethacrylic acid, $\alpha$-cyanoacrylic acid, and the like; esters of acrylic acid, for example, methyl acrylate, ethyl acrylate, butyl acrylate, octyl acrylate, cyanoethyl acrylate, and the like; vinyl esters such as vinyl acetate, propionate and butyrate; esters of methacrylic acid, such as methyl methacrylate, ethyl methacrylate, butyl methacrylate, and the like; nitriles, such as acrylonitrile and methacrylonitrile; acrylamides, such as methyl acrylamide, N-methylol acrylamide, N-butoxy methacrylamide, and the like; vinyl ethers, such as ethylvinyl ether, chloroethyl vinyl ether, and the like; the vinyl ketones, styrene derivatives including $\alpha$-methyl styrene, vinyl toluene, chlorostyrene; vinyl naphthalene; vinylidene chloride, vinyl bromide; vinyl chloroacetate, vinyl acetate, vinyl pyridine, and methyl vinyl ketone; olefins such as ethylene and propylene; and other copolymerizable monomers or mixtures of monomers having suitable reactivity ratios with vinyl halide monomers and known to those skilled in the art. The amount of comonomer that can be copolymerized with vinyl chloride is a function of the choice of comonomer and the intended end-use, as would be understood by those skilled in the art.

Low complex viscosity crosslinked post-chlorinated PVC (CPVC) useful in the present invention means a chlorinated PVC generally containing from higher than about 57% to less than about 70% by weight of bound chlorine, desiredly from about 60% to about 70% by weight and preferredly from about 63% to about 68% chlorine by weight. There are practical use limitations for chlorinated PVC beyond 70% chlorine content.

Techniques for post-chlorination of PVC are illustrated, for example, in U.S. Patent No. 4,377,459 which discloses a liquid chlorine method. The chlorination of low complex viscosity crosslinked PVC of the present invention can be carried out in any suitable or conventional chlorination process and is contemplated as within the purview of this invention.

The crosslinking agents employed may be any compound, not necessarily monomeric in nature, containing two or more ethylenic ($>C = C<$) groups per molecule. Examples of this class of materials include polyunsaturated-hydrocarbons,polyethers, polyesters, nitriles, acids, acid anhydrides, ketones, alcohols and polyunsaturated compounds of this class incorporating one or more of these and other functional groups. Specifically, there may be utilized divinyl benzene, divinyl naphthalene, low-molecular weight and vinyl monomer soluble polymerized dienes such as polybutadiene and other monomer soluble homopolymers of open chain aliphatic conjugated dienes which do not contain any appreciable number of conjugated double bonds, and other polyunsaturated hydrocarbons; polyunsaturated-esters,-ester-amides and other ester derivatives, such as ethylene glycol diacrylate, ethylene glycol dimethacrylate, allyl acrylate, di-allyl phthalate, methylene bisacrylamide, methylene bismethacrylamide, triacrylyl triazine, hexallyl trimethylene trisulfone, and many others; polyunsaturated ethers, such as divinyl ether, acryloyl terminal polyethers, diallyl ether, dimethyl allyl ether, diallyl ethylene glycol ether, diallyl, triallyl and other polyallyl ethers of glycerol or butene 1,2-diol or 1-phenyl-1,2,3-propanetriol, the polyallyl, vinyl and crotyl polyethers containing from two to seven or more of these or other alkenyl ether groupings per molecule and made from polyhydric alcohols, such as the carbohydrate sugars, and the so-called "sugar alcohols", including erythritol, pentaerythritol, arabitol, iditol, mannitol, sorbitol, inositol, raffinose, glucose, sucrose, and many other and other polyhydroxy carbohydrate derivatives, the corresponding polyalkenyl silanes, such as the vinyl and allyl silanes, and mixtures.

Suspension polymerization techniques to prepare PVC for example are well-known in the art as set forth in The Encyclopedia of PVC. pp. 76-85, published by Marcel Decker, Inc. (1976) and need not be discussed in great detail here. Within the scope of the present invention, this example technique involves the preparation of polymers polymerized from monomer(s) dispersed in an aqueous medium containing: (1) one or more primary dispersing agent(s) consisting of one or more polymers such as partially hydrolyzed polyvinyl alcohol having a degree of hydrolysis of generally 70-80%; there may also be present polyvinyl alcohol having a degree of hydrolysis higher than about 80% (PVA-HH); also, there may be cellulose ether, hydroxypropyl methyl cellulose (HPMC), partially hydrolyzed polyvinyl acetate, vinyl acetate-maleic anhydride, partially saponified polyalkyl acrylate or gelatine present; (2) one or more secondary dispersants described herein below and (3) a monomer soluble polymerization initiator. A conventional secondary dispersant is a polyvinyl acetate polymer having a degree of hydrolysis of generally 20-60% (PVA-LH).

Suitable polymerization initiators (catalyst) are selected from the conventional free radical initiators such as organic peroxides and azo compounds. The particular free radical initiator will depend upon the monomeric materials being polymerized, the molecular weight and color requirements of the polymer and the desired temperature of the polymerization reaction. Insofar as the amount of initiator employed is concerned, generally an amount in the range of about 0.005 part by weight to about 1.00 part by weight, based on 100 parts by weight of monomer(s) being polymerized, is satisfactory. It is preferred to employ an amount of initiator in the range of about 0.01 part by weight to about 0.20 part by weight, based on 100 parts by weight of vinyl halide monomer. Examples of suitable initiators include lauroyl peroxide, benzoyl peroxide, acetyl cyclohexyl sulfonyl peroxide, diacetyl peroxide, cumeme hydroperoxides, t-butyl peroxyneodecanoate, alpha-cumyl peroxyneodecanoate, t-butyl cumyl peroxyneodecanoate, t-butyl peroxypivalate, t-butyl peroxyoctoate, isopropyl peroxydicarbonate, di-n-propyl peroxydicarbonate, disecondary butyl peroxydicarbonate (SBP), 2,2'-azobis-(2,4,-dimethyl valeronitrile), azobisisobutyronitrile, azodiisobutyrate and t-butyl perbenzoate, the choice depending generally on the reaction temperature range selected. Of course, more than one initiator may be used.

The suspension polymerization process of this invention may be carried out at any suitable temperature range which is known and typical for the chosen method and monomer(s) to be polymerized. For instance, a temperature range from about $0°C$ to about $100°C$ may be generally employed. Preferably, a temperature rage from about $40°C$ to about $70°C$ is employed with a range from about $50°C$ to about $60°C$ being the most preferred. At temperatures of below about $40°C$ the complex viscosity of a crosslinked resin is relatively higher. At lower temperatures, relatively higher levels of complex viscosity suppressant are required. At relatively high polymerization temperatures above about $80°C$ there can arise differences in polymerization process parameters which must be considered. The temperature of polymerization may be kept constant or varied during the course of the polymerization. In order to facilitate temperature control, the reaction medium is generally kept in contact with heated or cooled surfaces. Cooling is typically necessary and is needed in direct proportion to the chosen rate of polymerization.

Conversion of vinyl monomer(s) generally refers to the amount of polymer yield as a percentage of vinyl monomer(s) charged. Percent PVC conversion can range from as low as 20% to as high as about 90%. Preferably monomer conversion is in the range from about 50% to about 80%. Polymerization may be terminated by the use of short-stopping agents or stabilizers which exhibit polymerization arresting characteristics. An exemplary listing of stabilizers which tend to inhibit polymerization and which are suitable for use as short-stopping agents in accordance with the present invention include the sulfur-containing organo-tin stabilizers, especially di-n-butyl tin S,S'-bis-(isoctyl mercapto acetate), di-n-butyl tin-bis-mercaptopropanoate, di-n-butyl tin bis-(isobutyl thioglycolate), n-butyl tin tris-(isobutyl thioglycolate), and tri-n-butyl tin isobutyl thioglycolate, as well as organic phosphites, and mixed salts thereof. Other exemplary short-stopping agents include alpha-methyl-styrene, hydroquinone, naphthoquinone and various phenolics such as phenol and bisphenol-A; thioalcohols, amines, as for example diphenylamine, triphenylamine, triethylamine and ethylenediamine tetraacetic acid, and natural tar acids. The short-stopping agent is employed in any effective amount to terminate the polymerization reaction. Generally, less than about 2 percent by weight of short-stopping agent, based on the weight of charged vinyl chloride monomer, is sufficient. For practical purposes the amount of short-stopping agent required to terminate vinyl chloride polymerization will range between about 0.01 to about 2 percent by weight of the monomer charged.

The introduction of crosslinked resins represents a long-needed improvement to the art, in particular for blends with uncrosslinked PVC or CPVC for controlled gloss appearance in molded articles. Skinless mass or suspension technology has been applied to the preparation of crosslinked PVC. However as noted above there has not been disclosed a crosslinked skinless resin having complex viscosity below $0.9x10^5$ poise. The utility in the skinless feature is evident in providing superior melt processibility wherein the agglomerated particles are reduced to primary flow units more readily. Mass polymerization also referred to as bulk polymerization is a skinless process and yields a skinless resin since there are no polymerization dispersants employed which otherwise become what is referred to as skin (a pericellular membrane surrounding the surface of the polymer particles). Mass resins exhibit desirable melt processability.

The critical method whereby the desired reduction in complex viscosity of a crosslinked resin was obtained involves polymerization using crosslinking agent(s), the above vinyl monomers and optional comonomers, in the presence of a complex viscosity suppressant. The amount used is a modifying amount. The suppressant must be at least partially miscible with vinyl halide monomer and should be sufficiently volatile to enable substantial removal from the resin particles obtained. The preferred suppressants are selected from the group consisting of lower aromatics and derivatives, lower ethers and derivatives, ketones and derivatives, aldehydes, and halogenated alkylenes. Specific examples include furan, tetrahydrofuran (THF), tetrahydropyran, dioxane, dimethyl ether, benzene, toluene, naphthalene, xylene, acetone, methyl ethyl ketone, ethyl acetate, acetaldehyde, butyraldehyde, trichloromethane, trichloroethane, perchloroethylene, methylene chloride, and butyl chloride. These suppressants can be substituted or unsubstituted. Examples of possible groups which could be substituted are halogens, alkyl groups having from 1 to 10 carbon atoms, OH, OR, or C(O)OR groups. Preferred are unsubstituted cyclic ethers. The most preferred is THF. The suppressant is employed in any effective amount to achieve the desired reduction in complex viscosity. Preferred are amounts from 5 weight parts (per hundred weight parts vinyl halide monomer) to about 50 weight parts, with most preferred amounts ranging from about 10 weight parts to about 30 weight parts.

In the preferred skinless process incorporated herein, an ion sensitive dispersant is employed as the primary dispersant to sustain colloidal dispersion at the very early stages of polymerization where colloidal stabilization is extremely critical in avoidance of massive agglomeration. Early in the conversion of monomers, NaOH is added to the polymerization medium. The ion sensitive primary dispersant is neutralized and substantially desorbs from the droplet surfaces. Suitable ionic materials are bases. Preferably, the ionic material is a monovalent inorganic or organic base such as amines, sodium hydroxide, ammonium hydroxide, potassium hydroxide, lithium hydroxide, and the like. The most preferred ionic material is sodium hydroxide. The NaOH is added at a point in the polymerization ranging from about 0.5% to 5.0% conversion levels. If the NaOH is added at the beginning or before about 0.5% conversion, the primary dispersant may be desorbed off the droplet too early resulting in higher chance for an unstable charge.

The ion sensitive dispersants which will thicken water are usually high molecular weight dispersants or crosslinked dispersants which will thicken water at concentrations of less than 2% in water, preferably less than 0.2%, and more preferably less than 0.1% concentration in water. Suitable ion sensitive thickening dispersants include crosslinked polyacrylic acid polymers, crosslinked ethylene malic anhydride polymers, high molecular weight uncrosslinked polyacrylic acid polymers and ethylene malic anhydride polymers, and the like. In the two poly method disclosed in U.S. Patent No. 4,742,085, thickened water is prepared in a separate vessel and introduced into a polymerizer which contains monomer and crosslinking agent. Initiator is introduced as a solution along with optional secondary dispersant(s). The preferred result of the skinless suspension process is to yield a particulate resin which is substantially absent a continuous pericellular membrane.

The crosslinking agents employed herewith are typically copolymerizable monomers. In practice, the amount of crosslinking monomer is relatively small compared to the amount of vinyl halide monomer and therefore in this specification, resin compositions of only vinyl halide and crosslinking monomer will be referred to as crosslinked PVC homopolymer. The amount of crosslinking agent employed in this invention is an amount sufficient to provide a tan $\delta$, of less than 1.0, preferably within a range of from about from about 0.1 to about 0.8, and most preferably a tan $\delta$ of from about 0.3 to about 0.8. Typically, the crosslinking agent is used at from about 0.1 to about 2 parts per hundred parts of resin.

Another exemplary skinless suspension process which may be used herein is what is known as a one poly floating method. The free radical initiator is first mixed with a solvent, such as isopropyl alcohol. The polymerization reactor charging procedure is explained in the steps below:

(a) Charge water, and ion sensitive primary dispersant(s) capable of thickening water to the polymerization vessel. The primary dispersant(s) can be added as such but is preferably added as a concentrated mixture with water. The water and primary dispersant(s) may be premixed before charging to the polymerization vessel. The charge water is preferably demineralized water.

(b) Agitate the water, and primary dispersant(s) until an emulsion is formed

(c) Reduce or stop the agitation such that non-turbulent flow is achieved.

(d) Charge the monomer(s), viscosity suppressant and crosslinking agent to be polymerized to the reactor vessel such that said monomer(s) floats on top of the emulsified thickened aqueous layer.

(e) Charge a solution comprising a solvent and the free radical initiator and optionally the secondary dispersant(s) to the reactor. If the secondary dispersant(s) are not combined with the initiator solution, then they should have been premixed with the monomer before adding to the reactor.

(f) Allow the initiator solution to diffuse through the monomer layer.

(g) Increase the agitation such that the entire polymerization medium is emulsified.

(h) Conduct polymerization until 1% to 2% conversion is reached, then add NaOH to desorb the primary dispersant from the monomer droplet.

(i) Continue the polymerization until the desired degree of polymerization is achieved.

An alternate skinless process employable herewith involves introduction in the reactor monomer(s), said viscosity suppressant, and crosslinking agent together with a solution containing the initiator and secondary dispersant(s). The initiator solution can alternatively be premixed with the monomer prior to adding to the reactor vessel, in which case agitation would not be necessary after adding to the reactor. This mixture is then agitated thoroughly. The thickened water phase is prepared in a separate vessel by mixing the ion sensitive thickening primary dispersant(s) with water, and charged into the bottom of the reactor through a bottom entry port. Agitation is then re-started and polymerization conducted as above.

The initiator can alternatively be charged into the water phase containing the primary dispersant. If this method were used, then the initiator would not first be premixed with the solvent.

After the desired conversion is achieved and before a dry particulate resin is obtained, residual monomer and viscosity suppressant are generally removed. This is performed in the conventional manner by stripping means and includes the step of separation of suppressant from residual monomer whereby monomer can be later recycled. The suppressant can be more easily isolated and removed from a skinless resin, as compared to a skin-type resin wherein the surface morphology due to the presence of the substantially continuous pericellular membrane which affects the rate of diffusion of suppressant through the wet resin.

In general, the crosslinked resins can be used alone or in a blend, plasticized or unplasticized. For applications directed to flexible articles comprising plasticized resin, crosslinked skinless PVC has proven commercially useful whereby the improved porosity and high friability of such resins enables preferred processibility improvements. Low complex viscosity crosslinked skinless PVC and post-chlorinated versions thereof furthers the range of useful molded articles which are derived from compositions comprising these resins. In uses directed to semi-rigid and rigid applications these resins are particularly suited. Articles derived from the resins, blends and compounds of this invention are formed by a variety of methods including extrusion, injection or blow molding. An especially useful application is the fabrication of large and/or intricate rigid articles by injection molding.

The resins of this invention can be combined with additional compounding ingredients such as plasticizers, stabilizers, lubricants, processing aids, fibrous and non-fibrous fillers and the like to make polyvinyl halide molding compounds. Compounds ready for molding can be in particulate form or in pellet form.

Various vinyl chloride resins and compositions within the scope of the present invention are illustrated in the following examples. While these examples will show one skilled in the art how to operate within the scope of this invention, they are not to serve as a limitation of the scope of the invention for such scope is defined only in the claims. It is pointed out that in the following examples, and elsewhere in the present specification and claims, all percentages and all parts are intended to express percent by weight and parts by weight unless otherwise clearly indicated.

**EXAMPLES**

Example Skinless Resin

A reduced complex viscosity crosslinked PVC resin was prepared from the following ingredients:

| Ingredient | Part by Weight |
|---|---|
| Vinyl Chloride (VCM) | 100 |
| Water (demineralized) | 150 |
| THF | 20 |
| Diallyl phthalate (DAP) | 0.6 |
| Polyacrylic acid dispersant | 0.035 |
| NaOH (sodium hydroxide) | 0.0035 |
| Isopropyl alcohol | 0.57 |
| PVA-LH | 0.4 |
| 2-ethylhexyl peroxydicarbonate | 0.06 |
| Phenolic shortstop | 0.02 |

A 55 liter reactor equipped with agitator and cooling means was used. The ingredients were charged according to the two-poly method. The VCM, THF and DAP were pre-mixed, and polymerization was conducted at 53°C. The NaOH was charged as a solution in water about 15 minutes after initiation. (about 1% conversion). At 600 minutes, the reaction was terminated by addition of phenolic shortstop. The resin was removed from the reactor, substantially stripped of residual monomer and suppressant, and dried to a free flowing powder.

The resin particles obtained were agglomerated, irregular shaped, porous crosslinked skinless resin particles with the following properties:

| Weight average particle size | 244 microns |
|---|---|
| DOP porosity | 0.2 cc/gm |
| Complex viscosity @ 210°C | $5 \times 10^3$ |
| Tan $\delta$ @ 210°C | 0.5 |

Example Skin Type

| Ingredient | Parts by Weight |
|---|---|
| Vinyl chloride | 100 |
| Water (demineralized) | 200 |
| Tetrahydrofuran (THF) | 20 |
| Diallyl phthalate (DAP) | 0.6 |
| Hydroxymethyl cellulose | 0.2 |
| PVA-LH | 0.1 |
| PVA-HH | 0.005 |
| o -cumylperoxyneodecanoate | 0.08 |
| Phenolic shortstop | 0.02 |

A 55 liter reactor equipped with agitation and cooling means was used. The ingredients were charged according to the two-poly method disclosed in this specification. VCM, THF and DAP were pre-mixed and the polymerization reaction was conducted at 53°C. At 700 minutes, the reaction was terminated by addition of the phenolic shortstop. The resin was removed from the reactor, substantially stripped of residual monomer and suppressant, and dried to a free flowing powder.

Examples :

The following table shows the complex viscosity and tan $\delta$ of different resins prepared in similar polymerizations as in Examples 1 and 2 with varying amounts of different suppressants and DAP. Samples 1C - 9C are comparative examples.

8

| No. | T°C | DAP phm | VISC. SUPP.* /Parts | Skinless/Skin | Complex Viscosity 210°C | Tan δ 210°C |
|---|---|---|---|---|---|---|
| 1 | 40 | 0.36 | 1/20 | Skin | $6.8x10^4$ | 0.6 |
| 2 | 40 | 0.6 | 1/35 | Skinless | $1.6x10^3$ | 0.49 |
| 3 | 40 | 0.6 | 2/20 | Skinless | $5.5x10^5$ | 0.72 |
| 4 | 40 | 0.6 | 3/20 | Skinless | $5.0x10^5$ | 0.77 |
| 5 | 40 | 0.6 | 1/50 | Skinless | $4.0x10^2$ | 0.39 |
| 6 | 53 | 0.36 | 1/20 | Skinless | $9.7x10^3$ | 0.6 |
| 7 | 53 | 0.7 | 1/20 | Skin | $1.5x10^3$ | 0.45 |
| 8 | 53 | 0.7 | 1/20 | Skinless | $1.4x10^3$ | 0.42 |
| 9 | 80 | 1.0 | 1/10 | Skinless | $1.2x10^3$ | 0.56 |
| 1C | 40 | 0.6 | 0 | Skinless | $5.3x10^6$ | 0.20 |
| 2C | 40 | 0.6 | 0 | Skin | $4.8x10^6$ | 0.20 |
| 3C | 53 | 0.26 | 0 | Skinless | $1.6x10^5$ | 0.19 |
| 4C | 53 | 0.36 | 0 | Skinless | $9.8x10^5$ | 0.5 |
| 5C | 53 | 0.45 | 0 | Skinless | $2.1x10^6$ | 0.4 |
| 6C | 56 | 0.32 | 0 | Skin | $1.5x10^6$ | 0.6 |
| 7C | 56 | 0.45 | 0 | Skin | $1.8x10^6$ | 0.4 |
| 8C | 80 | 1.0 | 0 | Skin | $3.25x10^4$ | 0.49 |
| 9C | 80 | 2.0 | 0 | Skin | $5.8x10^5$ | 0.31 |

*Visc. supp.: 1 = THF, 2 = toluene, 3 = methyl ethyl ketone

With reference to the above table, advantages can be seen whereby reduced complex viscosity can be achieved for crosslinked PVC at preferred temperatures. At 80°C and with no suppressant, as in 8C, crosslinking is evident by the Tan δ of .49, and complex viscosity is lower compared to 1C wherein polymerization is conducted at 40°C. The examples of the invention illustrate that complex viscosity can be reduced below that viscosity obtained at 80°C and is achieved at reduced polymerization temperatures. At any given temperature it can also be seen that increased levels of suppressant further decreases the complex viscosity. For any given suppressant, increased amounts yield further lowering of complex viscosity. It is also shown that with increased amounts of crosslinker, complex viscosity will be increased. The use of suppressant in these instances can offset this effect.

Various changes and modifications may be made in carrying out the present invention without departing from the spirit and scope thereof. These changes are to be considered as part of the invention. While in accordance with the Patent Statutes, the best mode and preferred embodiment has been set forth and the scope of the invention is not limited thereto, but rather by the scope of the attached claims.

## Claims

1. A composition in particulate form comprising a crosslinked vinyl halide polymer or post-chlorinated version characterized in that suspension polymerization is carried out in the presence of crosslinking monomer and from 5 to 50 weight parts per 100 weight parts vinyl halide monomer, of a suppressant which does not interfere with said crosslinking monomer and selected from the group consisting of furan, tetrahydrofuran, tetrahydropyran, dioxane, dimethyl ether, benzene, toluene, napthalene, xylene, acetone, methyl ethyl ketone, ethyl acetate, acetaldehyde, butyraldehyde, trichloromethane, perchloroethylene, methylene chloride, said crosslinked vinyl halide polymer exhibits a complex viscosity measured at 210°C of between $4x10^2$ to $8x10^4$ pascal-seconds.

2. The composition of claim 1 further comprising in a blend, an uncrosslinked polyvinyl halide polymer.

9

3. A molded article derived from the composition of claims 1 or 2.

4. A composition of claim 1 further characterized in that said said crosslinked polymer is a skinless resin.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | DE-A-2 606 934 (IMI(TAMI)INSTITUTE FOR RESEARCH AND DEV.,HAIFA(ISR.)) <br> * page 20, line 8-9; claims 1,4 * | 1-4 | C08F14/06 <br> C08L27/06 |
| Y | GB-A-1 150 488 (SHIN-ETSU CHEM. IND. CO. LTD.) <br> * page 2, line 24 - line 59; claims 1,6 * | 1-4 | |
| Y | US-A-4 070 534 (R.A. JONES ET AL.) <br> * the whole document * | 1-4 | |
| Y | US-A-3 025 284 (P.J. GEORGE ET AL.) <br> * table III * | 1-4 | |
| Y | FR-A-1 560 529 (NIPPON CARBIDE K.K.K.) <br> *Résumé* | 1-4 | |
| A | FR-A-2 258 404 (ICI LTD) <br> * claims 1,5,6; examples 2-4 * | 1-4 | |
| A | DE-A-1 068 466 (HOECHST AG) | 1-4 | |
| | ----- | | TECHNICAL FIELDS SEARCHED (Int. Cl.5) <br><br> C08F <br> C08L |

The present search report has been drawn up for all claims

| Place of search | Date of completion of the search | Examiner |
|---|---|---|
| THE HAGUE | 29 MAY 1992 | GLIKMAN J.F.M. |

EPO FORM 1503 03.82 (P0401)